# EUROPEAN PATENT SPECIFICATION

(11) **EP 2 858 291 B1**
(45) Date of publication and mention of the grant of the patent: **07.06.2017**
(21) Application number: 13187249.1
(22) Date of filing: 03.10.2013
(51) Int. Cl.: H04L 5/00, H04W 74/08

(54) **Hidden node interference reduction**
Hidden-Node-Interferenzminderung
Réduction d'interférence de noeud caché

(43) Date of publication of application: 08.04.2015
(73) Proprietor: Telefonaktiebolaget LM Ericsson (publ), 164 83 Stockholm (SE)
(72) Inventor: Wilhelmsson, Leif, SE-247 55 Dalby (SE); Nilsson, Johan, SE-236 38 Höllviken (SE)
(74) Representative: Ericsson

(56) References cited:
- US-A1- 2008 095 163
- US-A1- 2013 136 097
- TIM FARNHAM: "REM based approach for hidden node detection and avoidance in cognitive radio networks", GLOBAL COMMUNICATIONS CONFERENCE (GLOBECOM), 2012 IEEE, IEEE, 3 December 2012 (2012-12-03), pages 1391-1397, XP032374865, DOI: 10.1109/GLOCOM.2012.6503308 ISBN: 978-1-4673-0920-2
- TSUKAMOTO K ET AL: "EXPERIMENTAL EVALUATION OF DECISION CRITERIA FOR WLAN HANDOVER: SIGNAL STRENGTH AND FRAME RETRANSMISSION", IEICE TRANSACTIONS ON COMMUNICATIONS, COMMUNICATIONS SOCIETY, TOKYO, JP, vol. E90B, no. 12, 1 December 2007 (2007-12-01), pages 3579-3590, XP001509842, ISSN: 0916-8516, DOI: 10.1093/IETCOM/E90-B.12.3579
- GONZALEZ T F ED - MOR TAL ET AL: "CLUSTERING TO MINIMIZE THE MAXIMUM INTERCLUSTER DISTANCE", THEORETICAL COMPUTER SCIENCE, AMSTERDAM, NL, vol. 38, 1 June 1985 (1985-06-01), pages 293-306, XP008004915, ISSN: 0304-3975, DOI: 10.1016/0304-3975(85)90224-5

## Description

### Technical Field

The present invention relates generally to the field of interference reduction in wireless communication networks. More particularly, it relates to reduction of interference caused by a hidden node.

### Background

In the context of wireless communication systems, Carrier Sense Multiple Access (CSMA) is an approach that enables sharing of a channel between devices (e.g. mobile terminals) without centralized control or strict timing being necessary. CSMA is, for example, used in IEEE 802.11 systems.

One flavor of CSMA is CSMA with collision avoidance (CSMA/CA). In CSMA/CA, the channel is sensed by a device before transmission is attempted. If the channel is busy, the intended transmission is deferred. CSMA/CA has many advantages. One advantage with CSMA/CA is that the amount of data it is possible to transmit for a particular device degrades softly when the number of devices sharing the channel increases. This is in contrast to many other systems where transmission resources are typically reserved for each particular device and, therefore, there might typically be a strict upper limit for the number of devices that can be supported.

In systems based on CSMA, the so-called hidden node problem refers to the situation where a first device (node) cannot hear a second device (node), even though both devices may be heard by an access point that they communicate with, i.e. both devices are within coverage of the access point but not within coverage of each other. Thus, when the first device senses the channel before transmission, the channel appears to be free even if the second device is transmitting. Consequently, the first device may initiate transmission and a collision occurs at the access point.

One known way to address the hidden node problem is to have a device (e.g. the first device) which intends to transmit first send a request to send (RTS) to the intended source (e.g. an access point). If the intended source receives the RTS, it may reply with a clear to send (CTS) if the channel is free. After the first device has received the CTS, the actual transmission may be performed. If no response is received, the transmission is deferred. Even if the second device would not hear an RTS of the first device, it typically hears the CTS from the intended source. Thus, if a device hears a CTS which is not related to an RTS sent by itself it also defers any intended transmission. There is still a risk of collision when transmitting the RTS. However, since the RTS is typically much shorter than an actual data transmission, the probability for a collision with the RTS message is much smaller than the probability for a collision with the actual data.

One drawback with the RTS/CTS procedure is that it adds overhead and latency to the data transmission. It has been found that it is often more effective to allow some collisions due to hidden nodes than to protect all transmissions with RTS/CTS.

An alternative approach to the hidden node problem is presented in US2013/0136097A1 where a data transmission apparatus in a communication system is disclosed which includes a reception unit configured to receive adjacent terminal information from a plurality of terminals through a new frequency band. The apparatus also includes a verification unit configured to identify positions of the terminals through the adjacent terminal information, group the terminals into terminal groups through position-based grouping, and verify transmission possible times. This approach presumes that a terminal performs measurements on adjacent terminals and, thus, that the adjacent terminals are transmitting. Furthermore, the approach requires a large amount of overhead information to be transmitted from the terminals to the apparatus in the form of adjacent terminal information.

Another alternative approach is presented in "REM based approach for hidden node detection and avoidance in cognitive radio networks" by Tim Farnham, Globecom 2012 - Cognitive Radio and Networks Symposium, pp. 1391-1397. In this disclosure, a radio environment map (REM) is used to detect and avoid the hidden node problem based on measurements by measurement capable devices.

US 2008/0095163 A1 discloses a method and communication device for routing unicast and multicast messages.

A problem with existing solutions to the hidden node problem is that they typically cause throughput reduction (e.g. by adding overhead).

There is a general need for alternative methods and arrangements that solve the hidden node problem. Preferably, the hidden node problem should be solved with minimum throughput reduction.

### Summary

The invention is disclosed according to the independent claims. The subject-matter disclosed below in the description and going beyond the scope of the claims has to be considered as examples and not embodiments even if words like "embodiment" or "invention" are used in said description.

It should be emphasized that the term "comprises/comprising" when used in this specification is taken to specify the presence of stated features, integers, steps, or components, but does not preclude the presence or addition of one or more other features, integers, steps, components, or groups thereof.

In this disclosure, the notations "mobile terminal" and "terminal" are used. The (mobile) terminal may be any suitable wireless communication device. One example of a (mobile) terminal is a station (STA) as defined in accordance with IEEE 802.11 systems.

Furthermore, the notation "access point" is used. The access point may be any suitable wireless communication base station. One example of a wireless communication base station is an access point as defined in accordance with IEEE 802.11 systems.

It is an object of some embodiments to obviate at least some of the above disadvantages and to provide methods and arrangements that solve the hidden node problem.

According to a first aspect, this is achieved by a hidden node interference reduction method of an access point of a wireless communication network, wherein the access point is adapted to serve a plurality of mobile terminals.

The method comprises receiving a signal from at least two of the plurality of mobile terminals, wherein each signal is indicative of a position of the respective mobile terminal.

The method also comprises partitioning the plurality of mobile terminals into one or more groups by determining a metric for at least one pair of mobile terminals based on the indicated positions, wherein the pair of mobile terminals comprises a first mobile terminal and a second mobile terminal, and wherein the metric is associated with a distance between the first mobile terminal and the second mobile terminal of the pair
of mobile terminals, and letting the first and second mobile terminals of the pair of mobile terminals belong to different groups if the metric fulfills a condition, wherein the condition is indicative of the first mobile terminal causing hidden node interference to the second mobile terminal.

The method further comprises allocating a separate respective frequency resource to each group of mobile terminals.

In some embodiments, the access point may apply beam forming and the metric may be determined based on a received signal strength of the position indicative signals from the first and second mobile terminals and on beam forming parameters of the first and second mobile terminals.

According to some embodiments, the method may further comprise causing transmission of a positioning signal for reception at two or more of the plurality of mobile terminals. Then, each of the position indicative signals from the at least two of the plurality of mobile terminals may be a positioning response, received in response to transmitting the positioning signal, and determined by the respective mobile terminal based on the positioning signal.

Causing transmission of a positioning signal may, for example, comprise one or more of generating the positioning signal, transmitting the positioning signal, and instructing another access point to generate and/or transmit the positioning signal.

According to some embodiments, the separate frequency resources comprise separate frequency bands and/or separate channels within a same frequency band.

In some embodiments, the method may further comprise transmitting an indication of the allocated respective frequency resource to at least one of the mobile terminals. For example, the indication of the allocated respective frequency resource may be in the form of an instruction to switch frequency band (or channel within a frequency band) and may be transmitted to the mobile terminals that need to switch frequency band according to the partitioning. In some embodiments, transmitting the indication of the allocated respective frequency resource to at least one mobile terminal may comprise transmitting an instruction to handover the at least one mobile terminal to another access point. For example, the indication of the allocated respective frequency resource transmitted to a mobile terminal may be in the form of a handover instruction to another access point that uses the frequency resource allocated to the mobile terminal according to the partitioning.

The positioning signal may, for example, be a Bluetooth signal, a IEEE 802.11 signal, a signal according to a Third Generation Partnership Project (3GPP) standard, or any other suitable signal.

The positioning signal may comprise a request for positioning responses according to some embodiments. Alternatively or additionally, the positioning signal may be adapted to be used by the respective mobile terminal to determine a positioning indication. For example, the positioning signal may comprise a measurement signal for determining the positioning indication (to be included in the positioning response).

In some embodiments, the mobile terminals that receive the positioning signal determine a position indication in response to receiving the positioning signal. The position indication may, for example, be determined based on a Global Navigation Satellite System (GNSS), e.g. the Global Positioning System (GPS), or based on any other known positioning system. Alternatively or additionally, the position indication may be determined based on the positioning signal from the access point. For example, measurements may be performed on the positioning signal to determine the position indication. If the mobile terminal has access to a signal propagation map of the environment, this may be utilized in the determination. In the embodiments, where the mobile terminals that receive the positioning signal determine a position indication, the positioning response typically comprises the positioning indication. The position indication may be determined without the mobile terminals performing measurements on neighboring mobile terminal transmissions.

If the access point uses beam forming, this may be utilized in the determination of the positions of the mobile terminals at the access point. For example, beam forming parameters may be used to determine a direction between the access point and a mobile terminal, and a received signal strength (e.g. in the form of a received signal strength indicator, RSSI) may be used to determine a distance between the access point and a mobile terminal. If the access point has access to a signal propagation map of the environment, this may be utilized in the determination.

According to some embodiments, the partitioning into one or more groups may be to minimize (or optimize or at least decrease) the probability of a hidden node to occur. In some embodiments, the maximum distance between positioning indications within a group is minimized.

The condition may comprise the metric falling on a first side of a metric threshold according to some embodiments. For example, the metric may be a distance between positioning indications and the metric threshold may indicate how close two mobile terminals should be to belong to a same group (or, correspondingly, how large the distance should be for the two terminals to belong to different groups). The metric threshold may be fixed or dynamic.

The metric may, for example, comprise one or more of a physical distance, a virtual distance, an estimated attenuation (or path loss), and a transmission activity estimate (e.g. an expected data rate). Thus, in some embodiments, partitioning the plurality of mobile terminals into one or more groups may be further based on an expected data rate of each of the plurality of mobile terminals. If the transmission activity of a potential hidden node is very low, it may be less important to place that mobile terminal in the appropriate group. It may also be beneficial to let two different frequency bands employed carry a similar total data rate.

A second aspect is a computer program product comprising a computer readable medium, having thereon a computer program comprising program instructions, the computer program being loadable into a data-processing unit and adapted to cause the data-processing unit to execute method steps according to the first aspect when the computer program is run by the data-processing unit.

A third aspect is an arrangement for hidden node interference reduction of an access point of a wireless communication network, wherein the access point is adapted to serve a plurality of mobile terminals.

The arrangement comprises a receiver, a partitioner and an allocator. The receiver is adapted to receive a signal from at least two of the plurality of mobile terminals, wherein each signal is indicative of a position of the respective mobile terminal.

The partitioner is adapted to partition the plurality of mobile terminals into one or more groups by determining a metric for at least one pair of mobile terminals based on the indicated positions (wherein the pair of mobile terminals comprises a first mobile terminal and a second mobile terminal, and wherein the metric is associated with a distance between the first mobile terminal and the second mobile terminal of the pair of mobile terminals) and letting the first and second mobile terminals of the pair of mobile terminals belong to different groups if the metric fulfills a condition, wherein the condition is indicative of the first mobile terminal causing hidden node interference to the second mobile terminal.

The allocator is adapted to allocate a separate respective frequency resource to each group of mobile terminals.

In some embodiments, the arrangement may further comprise a transmitter adapted to transmit an indication of the allocated respective frequency resource to at least one of the mobile terminals.

According to some embodiments, the transmitter may be further adapted to cause transmission of a positioning signal for reception at two or more of the plurality of mobile terminals. Then, each of the position indicative signals from the at least two of the plurality of mobile terminals may be a positioning response, determined by the respective mobile terminal based on the positioning signal, and the receiver may be adapted to receive the positioning responses in response to the transmitter transmitting the positioning signal.

In some embodiments, the transmitter may be adapted to cause transmission of the positioning signal without being adapted to transmit the indication of the allocated respective frequency resource.

The arrangement may, according to some embodiments, further comprise a controller adapted to cause the transmitter to transmit the positioning signal, to cause the partitioner to partition the plurality of mobile terminals into the one or more groups based on the received positioning responses, and to cause the allocator to allocate the frequency resources based on the partition.

According to a fourth aspect, an access point of a wireless communication network is provided, comprising the arrangement according to the third aspect.

In some embodiments, the second, third and fourth aspects may additionally have features identical with or corresponding to any of the various features as explained above for the first aspect.

An advantage of some embodiments is that the hidden node problem is solved. Thereby, network (spectrum and/or power) efficiency may be increased. Additionally, the quality of service for individual users may be increased since the number of collisions decrease.

Another advantage of some embodiments is that the solution is robust. For example, there is no dependence on other terminals transmitting at particular moments in time when a mobile terminal performs adjacent terminal measurements.

A further advantage of some embodiments is that the overhead is relatively small. For example, positioning responses may be transmitted relatively seldom (e.g. compared to the RTS/CTS protocol). Furthermore, the amount of information in the positioning responses may be kept at a relatively low level (e.g. one positioning indication of the mobile terminal as opposed to measurement information for many adjacent terminals).

### Brief Description of the Drawings

Further objects, features and advantages will appear from the following detailed description of embodiments, with reference being made to the accompanying drawings, in which:
Fig. 1 is a schematic drawing illustrating the hidden node problem and a partitioning according to some embodiments;
Fig. 2 is a schematic drawing illustrating the hidden node problem and a partitioning according to some embodiments;
Fig. 3 is a combined flowchart and signaling diagram illustrating example method steps and signals according to some embodiments;
Fig. 4 is a block diagram illustrating an example arrangement for an access point according to some embodiments;
Fig. 5 is a block diagram illustrating an example arrangement for a mobile terminal according to some embodiments; and
Fig. 6 is a schematic drawing illustrating a computer readable medium according to some embodiments.

### Detailed Description

In the following, embodiments will be described where the hidden node problem is solved by an access point transmitting a positioning signal to mobile terminals within its coverage range and receiving corresponding positioning responses form two or more of the mobile terminals. Based on the positions of the mobile terminals, the access point organizes the terminals into one or more groups and allocates respective frequency resources to each of the groups. Thus, a form of location-aided channel selection for CSMA based network is provided according to some embodiments.

One application of some embodiments may be found in Wi-Fi. With increased use of Wi-Fi, the ISM (industrial, scientific and medical) radio band at 2.4 GHz is getting congested and deployment of Wi-Fi in the 5 GHz ISM radio band is increasing. The available bandwidth is much larger in the 5 GHz band. Hence, the number of possible channels is correspondingly larger than for the 2.4 GHz band. Even so, the 2.4 GHz band is still interesting. For example, the path loss increases with increased frequency and therefore the 2.4 GHz band may typically still be the preferred choice if it is not too congested. It may be beneficial to be able to use both ISM bands and many access points (AP) employ a dual band radio solution.

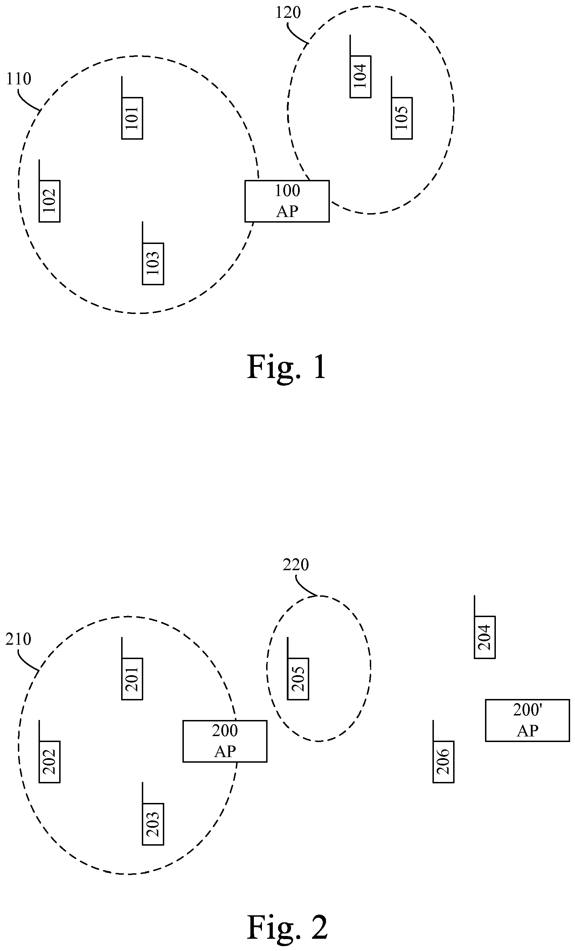

Figure 1 illustrates the hidden node problem and a partitioning according to some embodiments. An access point (AP) 100 serves a plurality of mobile terminals 101, 102, 103, 104, 105. All of the mobile terminals 101, 102, 103, 104, 105 are within the coverage area of the access point 100, but some mobile terminals (e.g. terminals 102 and 105) may be out-of-reach of one another. Thus, if terminal 102 is to start a transmission and probes the channel to see if it is free, it may consider the channel to be free and start transmission even if terminal 105 is simultaneously transmitting, which will cause a collision at the access point 100. This is an example of when terminal 105 constitutes a hidden node with respect to terminal 102.

If the access point 100 has information regarding the positions of terminals 102 and 105 (and possibly also of the other terminals) it may foresee that there is a potential hidden node problem due to the large distance between terminals 102 and 105. To overcome this anticipated problem, the access point may choose to have the terminals 102 and 105 using different frequency resources (e.g. different frequency bands) by grouping the mobile terminals 101, 102, 103, 104, 105 into two groups 110, 120 (wherein the terminals 102 and 105 belong to different groups) and allocating different frequency resources to different groups. Typically, terminals that are close to each other may be grouped in the same group and/or terminals that are grouped in the same group should not be too far from each other. Other parameters than physical/geographical distance may also be taken into account.

Figure 2 illustrates the hidden node problem and a partitioning according to some embodiments. An access point (AP) 200 serves the mobile terminals 201, 202, 203, 205 and another access point (AP) 200' serves the mobile terminals 204, 206. In this example, the access point 200 detects a potential hidden node problem between terminals 202 and 205 and also between terminals 203 and 205. Accordingly, the access point 200 partitions the mobile terminals 201, 202, 203, 205 into two groups 210 and 220, where terminals 202, 203 belong to a different group than terminal 205. However, since the access point 200 in this example only supports one frequency band, it hands over the terminal 205 to the neighboring access point 200' which serves (at least) the frequency band not supported by access point 200. The access points 200 and 200' may be physically different access points (e.g. two different devices) or they may be virtually different access points (e.g. supported by a single device).

The hidden node problem may also occur when two mobile terminals are associated with different access points. For example, if the terminals 202 and 206 of Figure 2 use the same frequency resource, there may be a hidden node problem even if they are associated with different access points (200 and 200' respectively). In such cases, the terminals may or may not be part of the same Extended Service Set (ESS) and the access points may or may not be controlled by the same wireless controller.

Furthermore, the hidden node problem may occur when two mobile terminals operate on different, yet interfering, Wi-Fi channels (e.g. different channels in a same frequency band which are close, adjacent or overlapping).

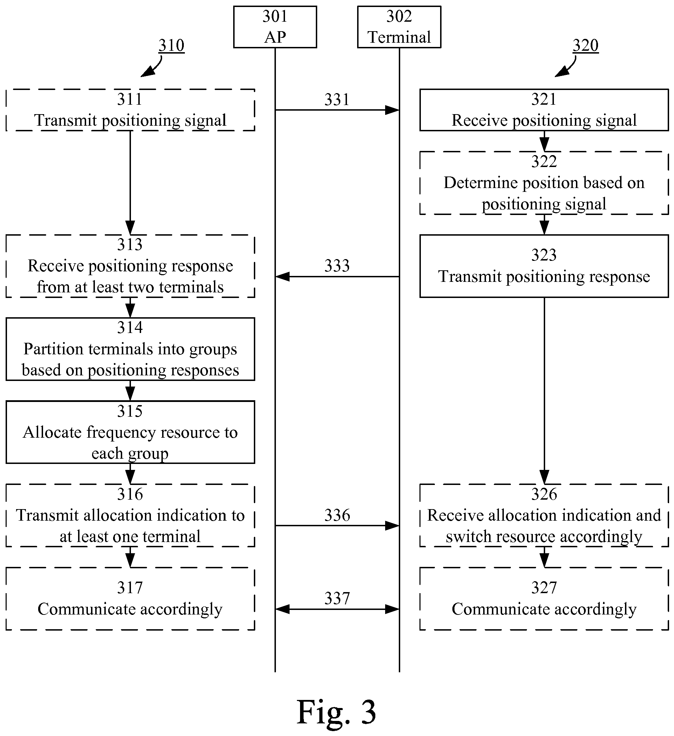

Figure 3 illustrate a method 310 carried out by an access point (AP) 301 according to some embodiments. Figure 3 also illustrates a corresponding method 320 carried out by a mobile terminal (Terminal) 302 and related signaling between the access point 301 and the mobile terminal 302. Prior to execution of the method 320, the access point may (according to some embodiments) detect that a hidden node scenario is probable and execute the method 320 only after such detection.

That the hidden node scenario is probable may be detected according to any suitable known or future method. In some embodiments, it may be determined whether an execution condition is fulfilled, wherein the execution condition is indicative of a hidden node scenario being probable.

According to one example, the received signal strength at the access point may be studied and probability of a hidden node scenario may be considered detected if signals from two or more terminals are received with low signal strength (e.g. a signal strength that falls below a signal strength threshold).

According to another example, the location of the two or more terminals may be used in combination with the execution condition above. For example, if two out of the two or more terminals having low signal strength are located on opposite (or substantially opposite) sides of the access point, it may be considered detected that a hidden node scenario is probable, while a hidden node scenario is not probable if all of the two or more terminals having low signal strength are located substantially on the same side of the access point. In another example, if two out of the two or more terminals having low signal strength are located at a distance from each other that is larger than a distance threshold, it may be considered detected that a hidden node scenario is probable, while a hidden node scenario is not probable if none of the two or more terminals having low signal strength are located at a distance from each other that is larger than the distance threshold.

According to a third example, it may be determined that a hidden node scenario is probable if the access point starts to receive a packet from one terminal and (during this reception) suddenly triggers the presence of a packet from another terminal, which typically indicates that the one terminal is hidden from the another terminal. The described event is possible since an access point may continue to search for the initial part of another packet in parallel with demodulation of one packet.

The method 310 starts in step 311 where a positioning signal 331 is transmitted by the access point 301. The positioning signal 331 is received by the terminal 302 (and possibly by one or more other terminals served by the access point 301) in step 321 of method 320, and the terminal 302 may determine its position in step 322 based on the positioning signal. As mentioned above, a position determination may be performed in various ways, e.g. by GNSS, by measurements on the positioning signal, by mapping to a signal propagation map, or by any combination thereof. The position may be determined in relation to the access point (e.g. distance and direction) or in absolute terms. In some embodiments, the positioning signal comprises information about the location of the access point that may be used in the positioning determination.

A feature for user equipments (UE) that may be relevant in this context is (indoor) positioning. Typically, indoor positioning is based on a hub of some sort (e.g. an access point in this context) transmitting a signal which, when received by the UE, can be used to determine the location. If signals from more than one hub can be received, the accuracy of the position estimation can typically be enhanced.

Positioning solutions based on Bluetooth and/or Wi-Fi may also be used. For example, a Wi-Fi access point may be co-located with a Bluetooth transceiver. The access point may trigger the Bluetooth transceiver to send a signal that may be used for positioning, e.g. when the access point determines that there is a need for partitioning due to potential hidden nodes.

In some embodiments, a terminal has a signal propagation map (e.g. downloaded previously and available "off-line") and when the positioning signal is received, the terminal can estimate its location based on the properties (e.g. the impulse response, unique for each position in a room) of the received signal and the signal propagation map. In these embodiments, the positioning signal may be broadcasted and the different terminals determine their respective location based on the same signal.

A positioning response 333 is transmitted from the terminal 302 in step 323, and in step 313, the access point 301 receives positioning responses from at least two terminals. The positioning responses may comprise positioning indications of the respective terminals. Step 313 may actually comprise reception of a positioning response from only one terminal, but in that case the method would end there and steps 314-316 would not be executed.

In some embodiments, step 311 may be discarded and step 313 may comprise receiving any suitable signal from the respective terminals. For example, when the access point 301 applies beam forming, the beam forming parameters may be used to determine a direction between the access point 301 and the terminal 302 and an RSSI (or similar measure) of the received suitable signal may be used to determine a distance between the access point 301 and the terminal 302.

The access point 301 partitions the terminals into groups in step 314 with the object to avoid (or at least minimize the impact of) the hidden node problem. The partitioning is based on the positioning responses (or other positioning indications, e.g., from beam forming parameters). If positioning responses are not available from all mobile terminals served by the access point, the grouping may be firstly based on the available positioning responses and then the remaining terminals may be added to the groups according to any other principle (e.g. order of arrival to the access point).

As has been mentioned above, the partitioning may be based on various principles. According to one principle, the maximum distance (based on the positioning indications) between terminals in a same group may be minimized. Such a principle may be implemented by first determining distances between all pairs of terminals and sort the distances. Then, the two terminals with the largest distance are put in different groups. Then, the two terminals with the second largest distance are put in different groups (unless both terminals of the pair are not already in a group), and so on. In some variants, the data rate expected for the different terminals are also taken into account. For example, the partitioning into groups may have the additional constraint that the frequency resources should be loaded with a similar or comparable data rate.

A new grouping of terminals may be needed, for example, if one or more of the terminals change their location and/or if a new terminal is connected to the access point and/or if one or more terminals are disconnected from the access point.

Different frequency resources are allocated to different groups in step 315. If the allocation in step 315 implicates that one or more terminals (e.g. terminal 302) need to switch frequency resource, an allocation indication 336 is transmitted to those terminals in step 316. The allocation indication 336 is received by the terminal 302 in step 326 and the terminal 302 switches resource accordingly. Thereafter, communication 337 continues using the new resource in steps 317 and 327.

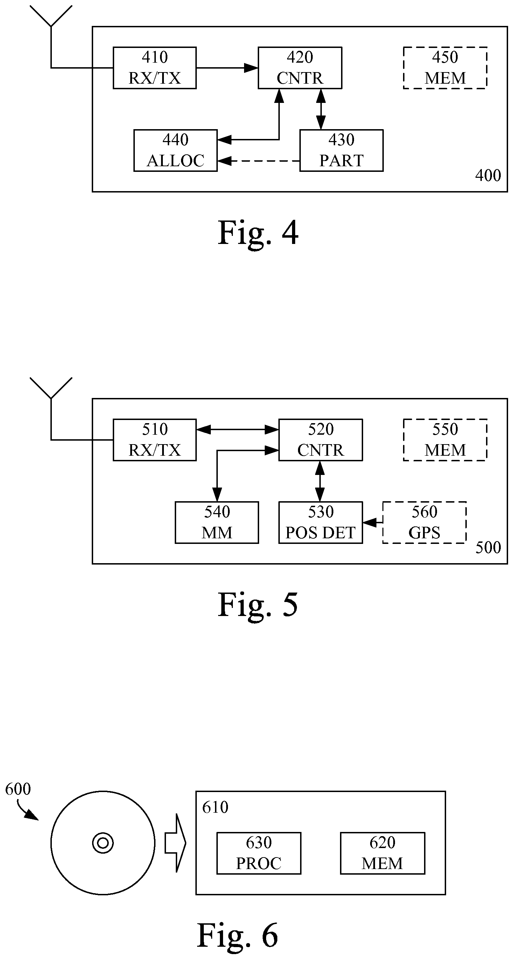

Figure 4 is a schematic block diagram illustrating an arrangement 400 according to some embodiments. The arrangement 400 may, for example, be comprised in an access point and/or may be adapted to perform the method 310 of Figure 3.

The arrangement 400 comprises a receiver and a transmitter in the form of a transceiver (RX/TX) 410, a controller (CNTR) 420, a partitioner (PART) 430, an allocator (ALLOC) 440 and optionally a memory (MEM) 450. The transceiver 410 may be adapted to perform steps 311, 313, 316 and 317 of Figure 3. The controller 420 may be adapted to cause the partitioner 430 and the allocator 440 to perform steps 314 and 315, respectively, of Figure 3. The memory 450 may be adapted to store data relevant to the operation of the arrangement, e.g. a list of mobile terminals currently served and respective currently allocated frequency resources.

Figure 5 is a schematic block diagram illustrating an arrangement 500 according to some embodiments. The arrangement 500 may, for example, be comprised in a mobile terminal and/or may be adapted to perform the method 320 of Figure 3.

The arrangement 500 comprises a receiver and a transmitter in the form of a transceiver (RX/TX) 510, a controller (CNTR) 520, a positioning detector (POS DET) 530, an mobility management unit (MM) 540 and optionally a memory (MEM) 550 and/or a GPS unit 560. The transceiver 510 may be adapted to perform steps 321, 323, 326 and 327 of Figure 3. The controller 520 may be adapted to cause the positioning detector 530 to perform step 322 of Figure 3 (optionally based on information from the GPS unit 560). The controller 520 may also be adapted to cause the mobility management unit 540 to perform a resource switch as indicated in step 326 of Figure 3. The memory 550 may be adapted to store data relevant to the operation of the arrangement, e.g. a signal propagation map if applied.

By application of various embodiments described herein a solution to the hidden node problem is provided by taking advantage of an access point (or a system of access points) supporting concurrent operation of two or more channels typically located in different bands. Terminals supporting operation in two different bands may contribute to the implementation of the embodiments. By intelligently allocating different terminals to different available channels used by the access point, the hidden node problem can be avoided. Thereby, increased (spectrum and/or power) efficiency of the network (e.g. a Wi-Fi network) may be achieved. Furthermore, since the number of collisions is typically reduced, a better quality of service (QoS) may be achieved for individual links in the network.

The described embodiments and their equivalents may be realized in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of this disclosure.

Embodiments may appear within an electronic apparatus (such as a wireless communication device) comprising circuitry/logic or performing methods according to any of the embodiments. The electronic apparatus may, for example, be an access point, a base station, or a base station controller.

According to some embodiments, a computer program product comprises a computer readable medium such as, for example, a diskette or a CD-ROM 600 as illustrated in Figure 6. The computer readable medium may have stored thereon a computer program comprising program instructions. The computer program may be loadable into a data-processing unit 630, which may, for example, be comprised in an access point 610. When loaded into the data-processing unit, the computer program may be stored in a memory 620 associated with or integral to the data-processing unit. According to some embodiments, the computer program may, when loaded into and run by the data-processing unit, cause the data-processing unit to execute method steps according to, for example, the method shown in Figure 3.

Reference has been made herein to various embodiments. However, a person skilled in the art would recognize numerous variations to the described embodiments that would still fall within the scope of the claims. For example, the method embodiments described herein describes example methods through method steps being performed in a certain order. However, it is recognized that these sequences of events may take place in another order without departing from the scope of the claims. Furthermore, some method steps may be performed in parallel even though they have been described as being performed in sequence.

In the same manner, it should be noted that in the description of embodiments, the partition of functional blocks into particular units is by no means limiting. Contrarily, these partitions are merely examples. Functional blocks described herein as one unit may be split into two or more units. In the same manner, functional blocks that are described herein as being implemented as two or more units may be implemented as a single unit without departing from the scope of the claims.

Hence, it should be understood that the details of the described embodiments are merely for illustrative purpose and by no means limiting. Instead, all variations that fall within the range of the claims are intended to be embraced therein.

## Claims

1. A hidden node interference reduction method of an access point (100, 200) of a wireless communication network employing Carrier Sense Multiple Access - CSMA, wherein the access point is adapted to serve a plurality of mobile terminals (101, 102, 103, 104, 105, 201, 202, 203, 204), the method comprising:
receiving a signal from at least two of the plurality of mobile terminals, wherein each signal is indicative of a position of the respective mobile terminal;
partitioning (314) the plurality of mobile terminals into one or more groups (110, 120, 210, 220) by:
determining a metric for at least one pair of mobile terminals based on the indicated positions, wherein the pair of mobile terminals comprises a first mobile terminal and a second mobile terminal, and wherein the metric is associated with a distance between the first mobile terminal and the second mobile terminal of the pair of mobile terminals; and
letting the first and second mobile terminals of the pair of mobile terminals belong to different groups if the metric fulfills a condition, wherein the condition is indicative of the first mobile terminal causing hidden node interference to the second mobile terminal; and
allocating (315) a separate respective frequency resource to each group of mobile terminals,
wherein partitioning the plurality of mobile terminals into one or more groups comprises minimizing a maximum distance between any pair of mobile terminals belonging to the same group,
wherein the access point applies beam forming and wherein the metric is determined based on a received signal strength of the position indicative signals from the first and second mobile terminals and on beam forming parameters of the first and second mobile terminals.

2. The method of claim 1 wherein the separate frequency resources comprise separate frequency bands.

3. The method of any of claims 1 through 2 further comprising transmitting (316) an indication (336) of the allocated respective frequency resource to at least one of the mobile terminals.

4. The method of any of claims 1 through 3 further comprising handing over the at least one mobile terminal to another access point.

5. The method of any of claims 1 through 4 wherein the condition comprises the metric falling on a first side of a metric threshold.

6. The method of any of claims 1 through 5 wherein partitioning the plurality of mobile terminals into one or more groups is further based on an expected data rate of each of the plurality of mobile terminals.

7. A computer program product comprising a computer readable medium (600), having thereon a computer program comprising program instructions, the computer program being loadable into a data-processing unit (610) and adapted to cause execution of the method according to any of claims 1 through 6 when the computer program is run by the data-processing unit.

8. An arrangement for hidden node interference reduction of an access point (100, 200) of a wireless communication network employing Carrier Sense Multiple Access - CSMA, wherein the access point is adapted to serve a plurality of mobile terminals (101, 102, 103, 104, 105, 201, 202, 203, 204), the arrangement comprising:
a receiver (410) adapted to receive a signal from at least two of the plurality of mobile terminals, wherein each signal is indicative of a position of the respective mobile terminal;
a partitioner (430) adapted to partition the plurality of mobile terminals into one or more groups (110, 120, 210, 220) by:
determining a metric for at least one pair of mobile terminals based on the indicated positions, wherein the pair of mobile terminals comprises a first mobile terminal and a second mobile terminal, and wherein the metric is associated with a distance between the first mobile terminal and the second mobile terminal of the pair of mobile terminals; and
letting the first and second mobile terminals of the pair of mobile terminals belong to different groups if the metric fulfills a condition, wherein the condition is indicative of the first mobile terminal causing hidden node interference to the second mobile terminal; and
an allocator (440) adapted to allocate a separate respective frequency resource to each group of mobile terminals,
wherein the partitioner is adapted to partition the plurality of mobile terminals into one or more groups by minimizing a maximum distance between any pair of mobile terminals belonging to the same group,
wherein the access point is adapted to apply beam forming and wherein the partitioner is adapted to determine the metric based on a received signal strength of the position indicative signals from the first and second mobile terminals and on beam forming parameters of the first and second mobile terminals.

9. The arrangement of claim 8 further comprising a transmitter (410) adapted to transmit an indication (336) of the allocated respective frequency resource to at least one of the mobile terminals.

10. An access point of a wireless communication network employing Carrier Sense Multiple Access - CSMA - comprising the arrangement (400) according to any of claims 8 through 9.

## Patentansprüche

1. Verfahren zur Hidden-Node-Interferenzminderung eines Zugangspunkts (100, 200) eines drahtlosen Kommunikationsnetzes, das Vielfachzugriff mit Trägerkennung - CSMA - einsetzt, wobei der Zugangspunkt so ausgelegt ist, dass er eine Mehrzahl von mobilen Endgeräten (101, 102, 103, 104, 105, 201, 202, 203, 204) versorgt, wobei das Verfahren umfasst:
Empfangen eines Signals von mindestens zweien der Mehrzahl von mobilen Endgeräten, wobei jedes Signal eine Position des jeweiligen mobilen Endgeräts anzeigt;
Aufteilen (314) der Mehrzahl von mobilen Endgeräten in eine oder mehrere Gruppen (110, 120, 210, 220) durch:
Bestimmen einer Metrik für mindestens ein Paar von mobilen Endgeräten basierend auf den angezeigten Positionen, wobei das Paar von mobilen Endgeräten ein erstes mobiles Endgerät und ein zweites mobiles Endgerät umfasst, und wobei die Metrik mit einer Entfernung zwischen dem ersten mobilen Endgerät und dem zweiten mobilen Endgerät des Paares von mobilen Endgeräten assoziiert ist; und
Gehörenlassen der ersten und zweiten mobilen Endgeräte des Paares von mobilen Endgeräten zu verschiedenen Gruppen, falls die Metrik eine Bedingung erfüllt, wobei die Bedingung anzeigt, dass das erste mobile Endgerät Hidden-Node-Interferenz für das zweite Endgerät verursacht; und
Zuteilen (315) einer separaten jeweiligen Frequenzressource zu jeder Gruppe von mobilen Endgeräten,
wobei das Aufteilen der Mehrzahl von mobilen Endgeräten in eine oder mehrere Gruppen ein Minimieren einer maximalen Entfernung zwischen jedem Paar von mobilen Endgeräten umfasst, die zur gleichen Gruppe gehören;
wobei der Zugangspunkt Strahlformung anwendet, und wobei die Metrik basierend auf einer Empfangssignalstärke der positionsanzeigenden Signale von den ersten und zweiten mobilen Endgeräten und auf Strahlformungsparametern der ersten und zweiten mobilen Endgeräte bestimmt wird.

2. Verfahren nach Anspruch 1, wobei die separaten Frequenzressourcen separate Frequenzbänder umfassen.

3. Verfahren nach einem der Ansprüche 1 bis 2, ferner umfassend ein Senden (316) einer Anzeige (336) der zugeteilten jeweiligen Frequenzressource an mindestens eines der mobilen Endgeräte.

4. Verfahren nach einem der Ansprüche 1 bis 3, ferner umfassend ein Weiterreichen des mindestens einen mobilen Endgeräts zu einem anderen Zugangspunkt.

5. Verfahren nach einem der Ansprüche 1 bis 4, wobei die Bedingung umfasst, dass die Metrik auf eine erste Seite einer Metrikschwelle fällt.

6. Verfahren nach einem der Ansprüche 1 bis 5, wobei das Aufteilen der Mehrzahl von mobilen Endgeräten in eine oder mehrere Gruppen ferner auf einer erwarteten Datenrate eines jeden der Mehrzahl von mobilen Endgeräten basiert.

7. Computerprogrammprodukt, umfassend ein computerlesbares Medium (600), das ein Computerprogramm darauf aufweist, das Programmanweisungen umfasst, wobei das Computerprogramm in eine Datenverarbeitungseinheit (610) geladen werden kann und so ausgelegt ist, dass es die Ausführung des Verfahrens nach einem der Ansprüche 1 bis 6 bewirkt, wenn das Computerprogramm durch die Datenverarbeitungseinheit ausgeführt wird.

8. Anordnung zur Hidden-Node-Interferenzminderung eines Zugangspunkts (100, 200) eines drahtlosen Kommunikationsnetzes, das Vielfachzugriff mit Trägerkennung - CSMA - einsetzt, wobei der Zugangspunkt so ausgelegt ist, dass er eine Mehrzahl von mobilen Endgeräten (101, 102, 103, 104, 105, 201, 202, 203, 204) versorgt, wobei die Anordnung umfasst:
einen Empfänger (410), der so ausgelegt ist, dass er ein Signal von mindestens zweien der Mehrzahl von mobilen Endgeräten empfängt, wobei jedes Signal eine Position des jeweiligen mobilen Endgeräts anzeigt;
einen Aufteiler (430), der so ausgelegt ist, dass er die Mehrzahl von mobilen Endgeräten in eine oder mehrere Gruppen (110, 120, 210, 220) aufteilt durch:
Bestimmen einer Metrik für mindestens ein Paar von mobilen Endgeräten basierend auf den angezeigten Positionen, wobei das Paar von mobilen Endgeräten ein erstes mobiles Endgerät und ein zweites mobiles Endgerät umfasst, und wobei die Metrik mit einer Entfernung zwischen dem ersten mobilen Endgerät und dem zweiten mobilen Endgerät des Paares von mobilen Endgeräten assoziiert ist; und
Gehörenlassen der ersten und zweiten mobilen Endgeräte des Paares von mobilen Endgeräten zu verschiedenen Gruppen, wenn die Metrik eine Bedingung erfüllt, wobei die Bedingung anzeigt, dass das erste mobile Endgerät Hidden-Node-Interferenz für das zweite Endgerät verursacht; und
einen Zuteiler (440), der so ausgelegt ist, dass er eine separate jeweilige Frequenzressource zu jeder Gruppe von mobilen Endgeräten zuteilt,
wobei der Aufteiler so ausgelegt ist, dass er die Mehrzahl von mobilen Endgeräten durch Minimieren einer maximalen Entfernung zwischen jedem Paar von mobilen Endgeräten, die zur gleichen Gruppe gehören, in eine oder mehrere Gruppen aufteilt;
wobei der Zugangspunkt so ausgelegt ist, dass er Strahlformung anwendet, und wobei der Aufteiler so ausgelegt ist, dass er die Metrik basierend auf einer Empfangssignalstärke der positionsanzeigenden Signale von den ersten und zweiten mobilen Endgeräten und auf Strahlformungsparametern der ersten und zweiten mobilen Endgeräte bestimmt.

9. Anordnung nach Anspruch 8, ferner umfassend einen Sender (410), der so ausgelegt ist, dass er eine Anzeige (336) der zugeteilten jeweiligen Frequenzressource an mindestens eines der mobilen Endgeräte sendet.

10. Zugangspunkt eines drahtlosen Kommunikationsnetzes, das Vielfachzugriff mit Trägerkennung - CSMA - einsetzt, umfassend die Anordnung (400) nach einem der Ansprüche 8 bis 9.

## Revendications

1. Procédé de réduction d'interférence de noeud caché d'un point d'accès (100, 200) d'un réseau de communication sans fil employant un accès multiple à détection de porteuse, CSMA, dans lequel le point d'accès est apte à desservir une pluralité de terminaux mobiles (101, 102, 103, 104, 105, 201, 202, 203, 204), le procédé comprenant :
la réception d'un signal en provenance d'au moins deux de la pluralité de terminaux mobiles, dans lequel chaque signal est indicatif d'une position du terminal mobile respectif ;
le partitionnement (314) de la pluralité de terminaux mobiles en un ou plusieurs groupes (110, 120, 210, 220) par :
la détermination d'une métrique pour au moins une paire de terminaux mobiles sur la base des positions indiquées, dans lequel la paire de terminaux mobiles comprend un premier terminal mobile et un deuxième terminal mobile, et dans lequel la métrique est associée à une distance entre le premier terminal mobile et le deuxième terminal mobile de la paire de terminaux mobiles ; et
la permission aux premier et deuxième terminaux mobiles de la paire de terminaux mobiles d'appartenir à des groupes différents si la métrique remplit une condition, dans lequel la condition indique que le premier terminal mobile provoque une interférence de noeud caché au deuxième terminal mobile ; et
l'allocation (315) d'une ressource de fréquence respective distincte à chaque groupe de terminaux mobiles,
dans lequel le partitionnement de la pluralité de terminaux mobiles en un ou plusieurs groupes comprend la minimisation d'une distance maximale entre toute paire de terminaux mobiles appartenant au même groupe,
dans lequel le point d'accès applique une formation de faisceau et dans lequel la métrique est déterminée sur la base d'une force de signal reçu des signaux indicatifs de position à partir des premier et deuxième signaux mobiles et de paramètres de formation de faisceau des premier et deuxième terminaux mobiles.

2. Procédé selon la revendication 1, dans lequel les ressources de fréquences distinctes comprennent des bandes de fréquences distinctes.

3. Procédé selon l'une quelconque des revendications 1 et 2, comprenant en outre la transmission (316) d'une indication (336) de la ressource de fréquence respective allouée à destination d'au moins l'un des terminaux mobiles.

4. Procédé selon l'une quelconque des revendications 1 à 3, comprenant en outre le transfert de l'au moins un terminal mobile à un autre point d'accès.

5. Procédé selon l'une quelconque des revendications 1 à 4, dans lequel la condition comprend que la métrique se trouve sur un premier côté d'un seuil de métrique.

6. Procédé selon l'une quelconque des revendications 1 à 5, dans lequel le partitionnement de la pluralité de terminaux mobiles en un ou plusieurs groupes est en outre basé sur un débit de données prévu de chacun de la pluralité de terminaux mobiles.

7. Produit de programme informatique comprenant un support lisible par ordinateur (600), sur lequel se trouve un programme informatique comprenant des instructions de programme, le programme informatique pouvant être chargé dans une unité de traitement de données (610) et étant apte à provoquer l'exécution du procédé selon l'une quelconque des revendications 1 à 6 lorsque le programme informatique est exécuté par l'unité de traitement de données.

8. Agencement de réduction d'interférence de noeud caché d'un point d'accès (100, 200) d'un réseau de communication sans fil employant un accès multiple à détection de porteuse, CSMA, dans lequel le point d'accès est apte à desservir une pluralité de terminaux mobiles (101, 102, 103, 104, 105, 201, 202, 203, 204), l'agencement comprenant :
un récepteur (410) apte à effectuer la réception d'un signal en provenance d'au moins deux de la pluralité de terminaux mobiles, dans lequel chaque signal est indicatif d'une position du terminal mobile respectif ;
un partitionneur (430) apte à effectuer le partitionnement de la pluralité de terminaux mobiles en un ou plusieurs groupes (110, 120, 210, 220) par :
la détermination d'une métrique pour au moins une paire de terminaux mobiles sur la base des positions indiquées, dans lequel la paire de terminaux mobiles comprend un premier terminal mobile et un deuxième terminal mobile, et dans lequel la métrique est associée à une distance entre le premier terminal mobile et le deuxième terminal mobile de la paire de terminaux mobiles ; et
la permission aux premier et deuxième terminaux mobiles de la paire de terminaux mobiles d'appartenir à des groupes différents si la métrique remplit une condition, dans lequel la condition indique que le premier terminal mobile provoque une interférence de noeud caché au deuxième terminal mobile ; et
un allocateur (440) apte à effectuer l'allocation d'une ressource de fréquence respective distincte à chaque groupe de terminaux mobiles,
dans lequel le partitionneur est apte à effectuer le partitionnement de la pluralité de terminaux mobiles en un ou plusieurs groupes par la minimisation d'une distance maximale entre toute paire de terminaux mobiles appartenant au même groupe,
dans lequel le point d'accès est apte à appliquer une formation de faisceau et dans lequel le partitionneur est apte à déterminer la métrique sur la base d'une force de signal reçu des signaux indicatifs de position à partir des premier et deuxième signaux mobiles et de paramètres de formation de faisceau des premier et deuxième terminaux mobiles.

9. Agencement selon la revendication 8, comprenant en outre un émetteur (410) apte à effectuer la transmission d'une indication (336) de la ressource de fréquence respective allouée à au moins l'un des terminaux mobiles.

10. Point d'accès d'un réseau de communication sans fil employant un accès multiple à détection de porteuses, CSMA, comprenant l'agencement (400) selon l'une quelconque des revendications 8 à 9.
